(19)

Europäisches
Patentamt
European
Patent Office
Office européen
des brevets

(11) **EP 4 245 790 A1**

(12) **EUROPEAN PATENT APPLICATION**
published in accordance with Art. 153(4) EPC

(43) Date of publication:
**20.09.2023 Bulletin 2023/38**

(21) Application number: **21892106.2**

(22) Date of filing: **14.09.2021**

(51) International Patent Classification (IPC):
**C08G 63/60** $^{(2006.01)}$     **C08L 67/03** $^{(2006.01)}$

(52) Cooperative Patent Classification (CPC):
**C08G 63/60; C08L 67/03;** Y02W 30/62

(86) International application number:
**PCT/KR2021/012486**

(87) International publication number:
**WO 2022/102936 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.11.2020 KR 20200150209**

(71) Applicant: **SK Chemicals Co., Ltd.
Seongnam-si, Gyeonggi-do 13494 (KR)**

(72) Inventors:
• **HWANG, Da-Young
  Seongnam-si, Gyeonggi-do 13494 (KR)**
• **KIM, Ha-Neul
  Seongnam-si, Gyeonggi-do 13494 (KR)**
• **LEE, Yoo Jin
  Seongnam-si, Gyeonggi-do 13494 (KR)**

(74) Representative: **Berggren Oy
P.O. Box 16
Eteläinen Rautatiekatu 10A
00101 Helsinki (FI)**

(54) **POLYESTER COPOLYMER COMPRISING RECYCLED MONOMERS**

(57)      In the present disclosure, it is possible to identify and select recycled bis-2-hydroxyethyl terephthalate of a certain quality or higher, and thus the quality of a polyester resin prepared using the recycled bis-2-hydroxyethyl terephthalate can be improved.

EP 4 245 790 A1

Description

[TECHNICAL FIELD]

The present disclosure relates to a method for identifying recycled bis-2-hydroxyethyl terephthalate of a certain quality or higher, and to a polyester resin prepared by using the same as a monomer.

[BACKGROUND OF ART]

Since polyester resins have superior mechanical strength, heat resistance, transparency and gas barrierability, the polyester resin is suitable for a container for beverage, a packing film, or a material of an audio/video film and thus used in volume. In addition, it is widely produced worldwide as industrial materials such as medical fibers and tire cords. Sheets or boards of polyester have good transparency and excellent mechanical strength, so they are widely used as materials for cases, boxes, partitions, store shelves, protection panels, blister packing, construction materials, interior or exterior materials, and the like.
Waste plastics, which account for about 70% of marine pollution, have recently emerged as a serious social problem, and each country regulates the use of disposable plastics while promoting reuse of waste plastics. There are two main methods to recycle the waste plastics. In one method, waste plastics are collected, crushed and washed, and then melt-extruded and re-pelletized to be reused as raw materials. In another method, a material obtained by depolymerization is used as a monomer for plastic synthesis. In the case of the latter method, bis-2-hydroxyethyl terephthalate can be obtained by depolymerization of PET or PETG in waste plastics, and studies are underway to use it as a monomer for a polyester copolymer.
However, it is very difficult to provide good-quality materials due to foreign substances in the waste plastics. In particular, plastics made from materials obtained by depolymerization of waste plastics often suffer from quality degradation.
Accordingly, the present inventors intensively studied a method for predicting the quality of a polyester prepared using recycled bis-2-hydroxyethyl terephthalate by checking the quality of the recycled bis-2-hydroxyethyl terephthalate in advance. As a result, as will be described later, it was confirmed that the above could be predicted from the quality of a recycled bis-2-hydroxyethyl terephthalate solution, and the quality of the polyester copolymer could be improved with this, thereby completing the present invention.

[DETAILED DESCRIPTION OF THE INVENTION]

[Technical Problem]

In the present disclosure, it is possible to identify and select recycled bis-2-hydroxyethyl terephthalate of a certain quality or higher, and thus the quality of a polyester resin prepared using the recycled bis-2-hydroxyethyl terephthalate can be improved.

[Technical Solution]

In order to solve the above problems, there is provided the following polyester copolymer,
wherein the polyester resin is obtained by copolymerizing recycled bis-2-hydroxyethyl terephthalate, a dicarboxylic acid or its derivative, and a diol containing ethylene glycol and a comonomer, has a structure in which a moiety derived from the bis-2-hydroxyethyl terephthalate, an acid moiety derived from the dicarboxylic acid or its derivative, and a diol moiety derived from the diol are repeated, and satisfies the following Equation 1:

$$[\text{Equation 1}]$$

$$0 < (A \times B / 100) < 10$$

in Equation 1,

A is a YID value of a 25 wt% recycled bis-2-hydroxyethyl terephthalate solution, and
B is wt% of a moiety derived from recycled bis-2-hydroxyethyl terephthalate based on a total weight of the polyester copolymer.

**Definition of Terms**

The copolymer according to the present disclosure relates to a copolymer prepared by copolymerizing a dicarboxylic acid or its derivative with a diol containing ethylene glycol and a comonomer, and to a polyester copolymer prepared by a copolymerization process in which recycled bis-2-hydroxyethyl terephthalate participates in the reaction.

As used herein, the term 'derived' refers to a moiety or unit, which is derived from a specific compound contained in the product of a chemical reaction when the specific compound participates in the chemical reaction. Specifically, each of the acid moiety derived from the dicarboxylic acid or its derivative and the diol moiety derived from the diol refers to a repeating unit in the polyester copolymer formed by an esterification reaction or a polycondensation reaction. In addition, the moiety derived from the bis-2-hydroxyethyl terephthalate refers to a repeating unit in the polyester copolymer formed by an esterification reaction in the copolymerization reaction.

**Dicarboxylic acid or its derivative**

The dicarboxylic acid or its derivative used in the present disclosure refers to a main monomer constituting the polyester copolymer together with the diol component. In particular, the dicarboxylic acid includes terephthalic acid, and physical properties such as heat resistance, chemical resistance, and weather resistance of the polyester copolymer according to the present disclosure may be improved by terephthalic acid. In addition, the residue of terephthalic acid may also be formed from terephthalic acid alkyl ester, preferably dimethylterephthalic acid.

The dicarboxylic acid component may further include an aromatic dicarboxylic acid component, an aliphatic dicarboxylic acid component, or a mixture thereof in addition to terephthalic acid. In this case, the dicarboxylic acid component other than terephthalic acid is preferably included in 1 to 30 wt% based on a total weight of the total dicarboxylic acid component.

The aromatic dicarboxylic acid component may be an aromatic dicarboxylic acid having 8 to 20 carbon atoms, preferably 8 to 14 carbon atoms, or a mixture thereof. Specific examples of the aromatic dicarboxylic acid include isophthalic acid, naphthalenedicarboxylic acid such as 2,6-naphthalenedicarboxylic acid, diphenyl dicarboxylic acid, 4,4'-stilbenedicarboxylic acid, 2,5-furandicarboxylic acid, 2,5-thiophenedicarboxylic acid, and the like, but are not limited thereto. The aliphatic dicarboxylic acid component may be an aliphatic dicarboxylic acid component having 4 to 20 carbon atoms, preferably 4 to 12 carbon atoms, or a mixture thereof. Specific examples of the aliphatic dicarboxylic acid include linear, branched or cyclic aliphatic dicarboxylic acid components including cyclohexanedicarboxylic acid such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, and azelaic acid, but are not limited thereto.

**Diol**

The diol component used in the present disclosure refers to a main monomer constituting the polyester copolymer together with the above-described dicarboxylic acid or its derivative. In particular, the diol component contains ethylene glycol and a comonomer, and the comonomer includes cyclohexanedimethanol, isosorbide, or diethylene glycol.

The ethylene glycol is a component that contributes to improving transparency and impact strength of the polyester copolymer. Preferably, the residue of ethylene glycol may be included in an amount of 5 to 100 moles based on 100 moles of the residue of the total diol component.

The cyclohexanedimethanol (e.g., 1,2-cyclohexanedimethanol, 1,3-cyclohexanedimethanol or 1,4-cyclohexanedimethanol) is a component that contributes to improving transparency and impact strength of the polyester copolymer to be prepared. Preferably, the residue of cyclohexanedimethanol may be included in an amount of 5 to 90 moles based on 100 moles of the residue of the total diol component.

The isosorbide is used to improve processability of the polyester copolymer to be prepared. Although the diol component of cyclohexanedimethanol and ethylene glycol improves the transparency and impact resistance of the polyester copolymer, shear thinning characteristics should be improved and a crystallization rate should be lowered for improving processability. However, it is difficult to achieve these effects using only the cyclohexanedimethanol and ethylene glycol. When containing isosorbide as the diol component, the shear thinning characteristics are improved and the crystallization rate is lowered while the transparency and impact strength are maintained, thereby improving the processability of the polyester copolymer to be prepared. Preferably, the residue of isosorbide may be contained in an amount of 0.1 to 50 moles based on 100 moles of the residue of the total diol component.

**Recycled bis-2-hydroxyethyl terephthalate**

As used herein, the term 'recycled bis-2-hydroxyethyl terephthalate' refers to a material obtained from waste plastics collected after use. Examples of waste plastics from which bis-2-hydroxyethyl terephthalate can be obtained include PET and PETG. For example, bis-2-hydroxyethyl terephthalate can be obtained from PEG collected after use by methods such as glycolysis, hydrolysis, methanolysis, and the like, and such methods are well known in the art.

In the process of obtaining the recycled bis-2-hydroxyethyl terephthalate from waste plastics, the recycled bis-2-hydroxyethyl terephthalate is subjected to several chemical steps, so that product quality is inevitably deteriorated when used as a monomer of a copolymer. In particular, when used as a monomer of the polyester copolymer, there is a problem in that color quality is deteriorated, and a large amount of by-products are generated as will be described later.

Therefore, the present disclosure is characterized in that a YID value of a 25 wt% recycled bis-2-hydroxyethyl terephthalate solution is measured in order to predict the quality of the polyester when recycled bis-2-hydroxyethyl terephthalate is used before preparing a polyester copolymer using the recycled bis-2-hydroxyethyl terephthalate. Preferably, a solvent of the 25 wt% recycled bis-2-hydroxyethyl terephthalate solution is dimethylformaldehyde, ethylene glycol, water, or cyclohexanedimethanol.

In addition, since the content of the recycled bis-2-hydroxyethyl terephthalate in the polyester copolymer affects the quality of the polyester copolymer, the present disclosure is characterized in that the polyester resin satisfies the condition of Equation 1. In Equation 1, "(A × B / 100)" is an arithmetic relation of two factors, and it is referred to as a 'yellow factor' for convenience of description in the present disclosure. Meanwhile, in Equation 1, the values of A and B refer to values excluding units, respectively. For example, when the moiety derived from recycled bis-2-hydroxyethyl terephthalate is included in 50 wt% based on a total weight of the polyester copolymer, B is 50.

Preferably, A is more than 0 and less than 15. As in Examples and Comparative Examples to be described later, when A exceeds 15, the color quality of the polyester copolymer is deteriorated regardless of B.

In addition, B is preferably 1 to 95. This means that the moiety derived from recycled bis-2-hydroxyethyl terephthalate is included in 1 to 95 wt% based on a total weight of the polyester copolymer according to the present disclosure. When B is less than 1, the content of the above-mentioned diol is relatively high, and accordingly, more by-products derived from the diol component, especially by-products derived from ethylene glycol, are generated, resulting in deterioration of the quality of the polyester copolymer. In addition, when B is more than 95, there is a problem in that the color quality and transparency of the polyester copolymer are deteriorated.

**Polyester copolymer**

The polyester copolymer according to the present disclosure can be prepared by copolymerizing the above-mentioned recycled bis-2-hydroxyethyl terephthalate, a dicarboxylic acid or its derivative thereof, and ethylene glycol and a comonomer. Herein, the copolymerization may be sequentially performed by an esterification reaction (step 1) and a polycondensation reaction (step 2).

The esterification reaction is performed in the presence of an esterification reaction catalyst, and an esterification reaction catalyst containing a zinc-based compound may be used. Specific examples of the zinc-based catalyst may include zinc acetate, zinc acetate dihydrate, zinc chloride, zinc sulfate, zinc sulfide, zinc carbonate, zinc citrate, zinc gluconate, and a mixture thereof. In addition, the amount of each starting material used is the same as described above.

The esterification reaction may be performed at a pressure of 0 to 10.0 $kg/cm^2$ and a temperature of 150 to 300 °C. The conditions of the esterification reaction may be appropriately adjusted according to specific characteristics of the polyester to be prepared, the ratio of each component, or process conditions. Specifically, the pressure may be 0 to 5.0 $kg/cm^2$, more preferably 0.1 to 3.0 $kg/cm^2$; and the temperature may be 200 to 270 °C, more preferably 240 to 260 °C.

The esterification reaction may be performed in a batch or continuous manner. The respective raw materials may be separately added, or they are added in the form of a slurry by mixing the diol component with the dicarboxylic acid component and recycled bis-2-hydroxyethyl terephthalate. In addition, a diol component such as isosorbide, which is a solid component at room temperature, may be dissolved in water or ethylene glycol, and then mixed with a dicarboxylic acid component such as terephthalic acid to form a slurry. Alternatively, after the isosorbide is melted at 60 °C or higher, a slurry may be prepared by mixing a dicarboxylic acid component such as terephthalic acid and other diol components. In addition, water may be added to the mixed slurry to help increase fluidity of the slurry.

The polycondensation reaction may be performed by reacting the esterification product at a temperature of 150 to 300 °C and a reduced pressure of 600 to 0.01 mmHg for 1 to 24 hours.

The polycondensation reaction may be performed at a temperature of 150 to 300 °C, preferably 200 to 290 °C, more preferably 260 to 280 °C; and a reduced pressure of 600 to 0.01 mmHg, preferably 200 to 0.05 mmHg, more preferably 100 to 0.1 mmHg. The reduced pressure condition of the polycondensation reaction enables the removal of glycol, which is a by-product of the polycondensation reaction, from the system. Accordingly, when the polycondensation reaction does not satisfy the reduced pressure condition of 400 to 0.01 mmHg, the removal of by-products may be insufficient. When the polycondensation reaction is performed outside the temperature range of 150 to 300 °C, that is, when the polycondensation reaction is performed at a temperature of 150 °C or lower, glycol, which is a by-product of the polycondensation reaction, cannot be effectively removed from the system, and as a result, an intrinsic viscosity of the final reaction product may be lowered, which adversely affects physical properties of the polyester resin to be prepared. When the reaction is performed at a temperature of 300 °C or higher, there is a high possibility that yellowing may occur on appearance of the polyester resin to be prepared. The polycondensation reaction may be performed for a time necessary for the intrinsic viscosity of the final reaction product to reach an appropriate level, for example, for an average retention time of 1 to 24 hours.

In addition, the polycondensation reaction may use a polycondensation catalyst including a titanium-based compound, a germanium-based compound, an antimony-based compound, an aluminum-based compound, a tin-based compound, or a mixture thereof.

Examples of the titanium-based compound may include tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoacetic ester titanate, isostearyl titanate, titanium dioxide, and the like. Examples of the germanium-based compound may include germanium dioxide, germanium tetrachloride, germanium ethyleneglycoxide, germanium acetate, a copolymer thereof, and a mixture thereof. Preferably, germanium dioxide may be used, and the germanium dioxide may be in a crystalline or amorphous form. Glycol soluble germanium dioxide may be also used.

Meanwhile, the polyester copolymer according to the present disclosure may have an intrinsic viscosity of 0.50 to 1.0 dl/g, preferably 0.50 to 0.85 dl/g, and more preferably 0.55 to 0.80 dl/g. The method for measuring the intrinsic viscosity will be specified in Examples to be described later.

In addition, '(Hunter L value) - (Hunter b value)' (hereinafter, referred to as Plaque Color L-b) measured with respect to a 6 mm-thick specimen of the polyester copolymer according to the present disclosure may be 83 or more, and more preferably 84 or more, 85 or more, 86 or more, 87 or more, 88 or more, 89 or more, or 90 or more. In addition, the upper limit of the Plaque Color L-b may be 100, and in the present disclosure, the Plaque Color L-b may be 99 or less, 98 or less, 97 or less, 96 or less, or 95 or less. The method for measuring the Plaque Color L-b will be specified in Examples to be described later.

In the present disclosure, there is also provided a product including the polyester copolymer.

## [ADVANTAGEOUS EFFECTS]

As describe above, in the present disclosure, it is possible to identify and select recycled bis-2-hydroxyethyl terephthalate of a certain quality or higher, and thus the quality of a polyester resin prepared using the recycled bis-2-hydroxyethyl terephthalate can be improved.

## [DETAILED DESCRIPTION OF THE EMBODIMENTS]

Hereinafter, preferred examples are presented to help the understanding of the present invention. However, the following examples are provided only for easier understanding of the present invention, and the present invention is not limited thereto.

In the following Examples and Comparative Examples, physical properties were evaluated as follows.

### (1) Residue composition

The residue composition (mol%) derived from acid and diol in the polyester resin was confirmed through 1H-NMR spectrum obtained at 25 °C using a nuclear magnetic resonance apparatus (JEOL, 600 MHz FT-NMR) after dissolving the sample in a $CDCl_3$ solvent at a concentration of 3 mg/mL. In addition, the residue of TMA was confirmed by quantitative analysis of spectrum in which the content of benzene-1,2,4-triethylcarboxylate produced by the reaction of ethanol with TMA through ethanolysis was measured at 250 °C using gas chromatography (Agilent Technologies, 7890B). And, it was confirmed as the content (wt%) based on a total weight of the polyester resin.

### (2) Intrinsic viscosity

After dissolving the polyester copolymer in orthochlorophenol (OCP) at a concentration of 0.12% at 150 °C, the intrinsic viscosity was measured in a constant temperature bath at 35 °C using an Ubbelohde viscometer. Specifically, a temperature of the viscometer was maintained at 35 °C, and the time taken (efflux time; $t_0$) for a solvent to pass between certain internal sections of the viscometer and the time taken (t) for a solution to pass the viscometer were measured. Subsequently, a specific viscosity was calculated by substituting $t_0$ and t into Formula 1, and the intrinsic viscosity was calculated by substituting the calculated specific viscosity into Formula 2.

**[Formula 1]**

$$\eta_{sp} = \frac{t - t_0}{t_0}$$

**[Formula 2]**

$$[\eta] = \frac{\sqrt{1 + 4A\eta_{sp}} - 1}{2Ac}$$

**(3) plaque color L-b**

The chromaticity and brightness of the sample were measured using Varian Cary 5 UV/Vis/NIR spectrophotometer equipped with a diffuse reflection accessory. A polyester resin specimen having a thickness of 6 mm was prepared, and transmission data was obtained with Illuminant D65 at an observer angle of 2°. This was processed using a color analysis device in the Grams/32 software to calculate Hunter L*a*b* values, and the results (L-b) by subtracting the b value from the L value were described in the table below.

**(4) YID**

Transmission data was obtained with Illuminant D65 at an observer angle of 2° with respect to the BHET solution, and measured using a CIE colorimeter. This was processed using a color analysis device in the software to calculate Hunter L*a*b*YID values, and the YID values are described in the table below.

**[Example 1]**

Bis-2-hydroxyethyl terephthalate (BHET) with commercially available quality was used, and the following experiments were performed by selecting 8 random (#1 to #8) BHETs.

**(1) YID measurement of BHET solution**

A solution was prepared by dissolving one of 8 types of BHETs in DMF (dimethylformamide) to 25 wt% at room temperature (23°C). YID was measured for each solution, and the results are shown in Table 1 below.

**(2) Preparation of polyester copolymer**

The following polyester copolymer was prepared with each BHET.
r-BHET (3461.1 g), TPA (969.4 g), EG (12.1 g), CHDM (140.2 g), and ISB (113.7 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (0.7 g) as a coloring agent were added thereto.
Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.
Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C°C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.95 dl/g to prepare a polyester copolymer.

[Table 1]

|  | YID of BHET solution | BHET content (wt%) | Yellow Factor[1) |
|---|---|---|---|
| #1 | 5.9 | 30 | 1.8 |
| #2 | 14.4 | 30 | 4.3 |
| #3 | 34.0 | 30 | 10.2 |
| #4 | 42.1 | 30 | 12.6 |
| #5 | 14.0 | 30 | 4.2 |
| #6 | 11.1 | 30 | 3.3 |
| #7 | 1.8 | 30 | 0.5 |
| #8 | 4.3 | 30 | 1.3 |
| 1) (YID of BHET solution) * (BHET content) / 100 | | | |

As shown in Table 1, when the BHET YID was greater than 15 (#3 and #4), the Yellow Factor also exceeded 10. From this, when the BHET YID value is 15 or less, the color quality of the polyester copolymer is expected to be excellent. Hereinafter, this was confirmed in detail in the remaining examples.

**[Example 2]**

A solution was prepared by dissolving BHET used in one of the following Examples and Comparative Examples in DMF to 25 wt%, and YID of each solution was measured and shown in Table 2 below.

**Example 2-1**

BHET (1269.7 g), TPA (terephthalic acid; 2361.8 g), EG (ethylene glycol; 673.5 g), CHDM (1,4-cyclohexanedimethanol; 221.5 g), and ISB (isosorbide; 98.2 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (0.7 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.55 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.70 dl/g to prepare a polyester copolymer.

**Example 2-2**

r-BHET (3461.1 g), TPA (969.4 g), EG (12.1 g), CHDM (140.2 g), and ISB (113.7 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (0.7 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.95 dl/g to prepare a polyester copolymer.

**Example 2-3**

r-BHET (4983.7 g), TPA (245.2 g), and CHDM (121.5 g) were placed in a 10 L reactor to which a column, and a condenser capable of being cooled by water were connected, and $TiO_2/SiO_2$ copolymer (0.5 g) as a catalyst, phosphoric acid (1.46 g) as a stabilizer, Polysynthren Blue RLS (manufactured by Clarient, 0.016 g) as a blue toner, and Solvaperm Red BB (manufactured by Clarient, 0.004 g) as a red toner were added thereto.

Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 210 °C at a rate of 40 °C/hour, and maintained at 210 °C. The solid-phase polymerization reaction was performed until the intrinsic viscosity (IV) of the particles in the reactor reached 0.80 dl/g to prepare a polyester copolymer.

**Example 2-4**

r-BHET (795.8 g), TPA (3814.0 g), EG (1554.0 g), and CHDM (188.0 g) were placed in a 10 L reactor to which a column, and a condenser capable of being cooled by water were connected, and $TiO_2/SiO_2$ copolymer (0.5 g) as a catalyst, phosphoric acid (1.46 g) as a stabilizer, and cobalt acetate (1.1 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 250 °C over 2 hours. Thereafter, an esterification reaction proceeded until the mixture in the reactor became transparent with the naked eye while maintaining the temperature of the reactor at 250 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 265 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.55 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 220 °C at a rate of 40 °C/hour, and maintained at 220 °C. The solid-phase polymerization reaction was performed until the intrinsic viscosity (IV) of the particles in the reactor reached 0.85 dl/g to prepare a polyester copolymer.

**Example 2-5**

r-BHET (2439.2 g), TPA (1471.5 g), EG (68.7 g), and CHDM (797.8 g) were placed in a 10 L reactor to which a column, and a condenser capable of being cooled by water were connected, and $TiO_2$ (1.0 g) as a catalyst, phosphoric acid (1.46 g) as a stabilizer, and cobalt acetate (0.8 g) as a coloring agent were added thereto.

Then, nitrogen was injected into the reactor to form a pressurized state in which the pressure of the reactor was higher than normal pressure by 2.0 kgf/cm$^2$ (absolute pressure: 2231.1 mmHg). Then, the temperature of the reactor was raised to 220 °C over 90 minutes, maintained at 220 °C for 2 hours, and then raised to 255 °C over 2 hours. Thereafter, an esterification reaction proceeded until the mixture in the reactor became transparent with the naked eye while maintaining the temperature of the reactor at 255 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 285 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.70 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Example 2-6**

r-BHET (1320.0 g), TPA (2164.2 g), EG (599.2 g), and CHDM (525.1 g) were placed in a 10 L reactor to which a column, and a condenser capable of being cooled by water were connected, and $GeO_2$ (1.0 g) as a catalyst, phosphoric acid (1.46 g) as a stabilizer, and cobalt acetate (1.0 g) as a coloring agent were added thereto.

Then, nitrogen was injected into the reactor to form a pressurized state in which the pressure of the reactor was higher than normal pressure by 1.5 kgf/cm$^2$ (absolute pressure: 1715.5 mmHg). Then, the temperature of the reactor was raised to 220 °C over 90 minutes, maintained at 220 °C for 2 hours, and then raised to 250 °C over 2 hours. Thereafter, an esterification reaction proceeded until the mixture in the reactor became transparent with the naked eye while maintaining the temperature of the reactor at 250 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 270 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Example 2-7**

r-BHET (1132.4 g), TPA (2220.2 g), EG (265.4 g), CHDM (1284.0 g), and ISB (156.2 g) were placed in a 10 L reactor to which a column, and a condenser capable of being cooled by water were connected, and $GeO_2$ (1.0 g) as a catalyst, phosphoric acid (1.46 g) as a stabilizer, Polysynthren Blue RLS (manufactured by Clarient, 0.013 g) as a blue toner, and Solvaperm Red BB (manufactured by Clarient, 0.004 g) as a red toner were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 265 °C over 2 hours. Thereafter, an esterification reaction proceeded until the mixture in the reactor became transparent with the naked eye while maintaining the temperature of the reactor at 265 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.65 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Example 2-8**

r-BHET (40.9 g), TPA (2643.1 g), EG (329.1 g), CHDM (1158.0 g), and ISB (587.0 g) were placed in a 10 L reactor to which a column, and a condenser capable of being cooled by water were connected, and $GeO_2$ (1.0 g) as a catalyst, phosphoric acid (1.46 g) as a stabilizer, Polysynthren Blue RLS (manufactured by Clarient, 0.020 g) as a blue toner, and Solvaperm Red BB (manufactured by Clarient, 0.008 g) as a red toner were added thereto.

Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 275 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

## Example 2-9

r-BHET (2930.2 g), TPA (1276.7.5 g), DMT (dimethyl terephthalate; 1492.0 g), EG (584.1 g), CHDM (221.5 g), and ISB (84.2 g) were placed in a 10 L reactor to which a column, and a condenser capable of being cooled by water were connected, and Mn(II) acetate tetrahydrate (1.5 g) and Sb$_2$O$_3$ (1.8 g) as a catalyst, and cobalt acetate (0.7 g) as a coloring agent were added thereto.

Then, nitrogen was injected into the reactor to bring the pressure of the reactor to normal pressure. Then, the temperature of the reactor was raised to 220 °C over 90 minutes, maintained at 220 °C for 2 hours, and then raised to 240 °C over 2 hours. Thereafter, an esterification reaction proceeded until the mixture in the reactor became transparent with the naked eye while maintaining the temperature of the reactor at 240 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 265 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200°C at a rate of 40°C/hour, and maintained at 200 °C. The solid-phase polymerization reaction was performed until the intrinsic viscosity (IV) of the particles in the reactor reached 0.95 dl/g to prepare a polyester copolymer.

## Example 2-10

r-BHET (3461.1 g), TPA (969.4 g), IPA (isophthalic acid; 2262.0 g), EG (12.1 g), CHDM (140.2 g), and ISB (113.7 g) were placed in a 10 L reactor to which a column, and a condenser capable of being cooled by water were connected, and GeO$_2$ (1.0 g) as a catalyst, and cobalt acetate (0.7 g) as a coloring agent were added thereto.

Then, nitrogen was injected into the reactor to form a pressurized state in which the pressure of the reactor was higher than normal pressure by 3.0 kgf/cm$^2$ (absolute pressure: 2966.68 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 190 °C at a rate of 40 °C/hour, and maintained at 190 °C. The solid-phase polymerization reaction was performed until the intrinsic viscosity (IV) of the particles in the reactor reached 1.0 dl/g to prepare a polyester copolymer.

**Comparative Example 1**

r-BHET (2441.8 g), TPA (1595.8 g), EG (101.3 g), CHDM (221.5 g), and ISB (98.2 g) were placed in a 10 L reactor to which a column, and a condenser capable of being cooled by water were connected, and $GeO_2$ (1.0 g) as a catalyst and phosphoric acid (1.46 g) as a stabilizer were added thereto.

Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. After maintaining at 100 mmHg for 1 hour, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.70 dl/g to prepare a polyester copolymer.

**Comparative Example 2**

r-BHET (4232.9 g), TPA (691.6 g), EG (406.8 g), CHDM (150.0 g), and ISB (106.4 g) were placed in a 10 L reactor to which a column, and a condenser capable of being cooled by water were connected, and $GeO_2$ (1.0 g) as a catalyst, phosphoric acid (1.46 g) as a stabilizer and cobalt acetate (0.7 g) as a coloring agent were added thereto.

Then, nitrogen was injected into the reactor to form a pressurized state in which the pressure of the reactor was higher than normal pressure by 1.0 kgf/cm$^2$ (absolute pressure: 1495.6 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 200 °C at a rate of 40 °C/hour, and maintained at 200 °C. The solid-phase polymerization reaction was performed until the intrinsic viscosity (IV) of the particles in the reactor reached 0.95 dl/g to prepare a polyester copolymer.

**Comparative Example 3**

r-BHET (934.5 g), TPA (2443.0 g), EG (558.9 g), CHDM (794.7 g), and ISB (26.9 g) were placed in a 10 L reactor to which a column, and a condenser capable of being cooled by water were connected, and $Ge_2O$ (1.0 g) as a catalyst, phosphoric acid (1.46 g) as a stabilizer, Polysynthren Blue RLS (manufactured by Clarient, 0.012 g) as a blue toner, and Solvaperm Red BB (manufactured by Clarient, 0.004 g) as a red toner were added thereto.

Then, nitrogen was injected into the reactor to form a pressurized state in which the pressure of the reactor was higher than normal pressure by 0.5 kgf/cm$^2$ (absolute pressure: 1127.8 mmHg). Then, the temperature of the reactor was raised to 220 °C over 90 minutes, maintained at 220 °C for 2 hours, and then raised to 255 °C over 2 hours. Thereafter, an esterification reaction proceeded until the mixture in the reactor became transparent with the naked eye while maintaining the temperature of the reactor at 255 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 280 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the mixture was discharged out of the reactor and stranded. This was solidified with a cooling liquid and granulated to have an average weight of about 12 to 14 mg to prepare a polyester copolymer.

**Comparative Example 4**

r-BHET (705.1 g), TPA (2249.8 g), EG (1214.9 g), and CHDM (95.4 g) were placed in a 10 L reactor to which a column, and a condenser capable of being cooled by water were connected, and $Ge_2O$ (1.0 g) as a catalyst, phosphoric acid (1.46 g) as a stabilizer, Polysynthren Blue RLS (manufactured by Clarient, 0.010 g) as a blue toner, and Solvaperm Red BB (manufactured by Clarient, 0.003 g) as a red toner were added thereto.

Then, nitrogen was injected into the reactor to form a pressurized state in which the pressure of the reactor was higher than normal pressure by 0.1 kgf/cm$^2$ (absolute pressure: 833.6 mmHg). Then, the temperature of the reactor was raised to 220 °C over 90 minutes, maintained at 220 °C for 2 hours, and then raised to 260 °C over 2 hours. Thereafter, an esterification reaction proceeded until the mixture in the reactor became transparent with the naked eye while maintaining the temperature of the reactor at 260 °C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L reactor capable of vacuum reaction.

Then, the pressure of the reactor was reduced from normal pressure to 5 Torr (absolute pressure: 5 mmHg) over 30 minutes, and the temperature of the reactor was raised to 270 °C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.65 dl/g. When the intrinsic viscosity of the mixture in the reactor reached a desired level, the mixture was discharged out of the reactor and stranded. This was solidified with a cooling liquid and granulated to have an average weight of about 12 to 14 mg.

The particles were allowed to stand at 150 °C for 1 hour to crystallize, and then put into a 20 L solid-phase polymerization reactor. Then, nitrogen was flowed into the reactor at a rate of 50 L/min. Herein, the temperature of the reactor was raised from room temperature to 140 °C at a rate of 40 °C/hour, and maintained at 140 °C for 3 hours. Thereafter, the temperature was further raised to 220 °C at a rate of 40 °C/hour, and maintained at 220 °C. The solid-phase polymerization reaction was performed until the intrinsic viscosity (IV) of the particles in the reactor reached 0.85 dl/g to prepare a polyester copolymer.

The results are shown in Table 2 below.

[Table 2]

|  | YID of r-BHET solution | r-BHET | CHDM | ISB | IV | Yellow Factor | Plaque Color L-b |
|---|---|---|---|---|---|---|---|
| Unit | - | wt% | mol% | mol% | dg/l | - | - |
| Ex. 2-1 | 5 | 30 | 8 | 2 | 0.70 | 1.5 | 91.5 |
| Ex. 2-2 | 7 | 75 | 5 | 2 | 0.95 | 5.2 | 87.8 |
| Ex. 2-3 | 10.5 | 92 | 4 | 0 | 0.80 | 9.7 | 83.3 |
| Ex. 2-4 | 13 | 14 | 5 | 0 | 0.85 | 1.8 | 91.2 |
| Ex. 2-5 | 15 | 50 | 30 | 0 | 0.70 | 7.5 | 85.5 |
| Ex. 2-6 | 1 | 30 | 20 | 0 | 0.80 | 0.3 | 92.7 |
| Ex. 2-7 | 3 | 22 | 50 | 3 | 0.65 | 0.7 | 92.3 |
| Ex. 2-8 | 7.5 | 1 | 50 | 15 | 0.80 | 0.1 | 92.9 |
| Ex. 2-9 | 12.5 | 59 | 8 | 2 | 0.95 | 7.3 | 85.7 |
| Ex. 2-10 | 10 | 75 | 5 | 2 | 1.00 | 7.5 | 85.5 |
| Comparati ve Ex. 1 | 25 | 58 | 8 | 2 | 0.70 | 14.4 | 78.6 |
| Comparati ve Ex. 2 | 15.5 | 77 | 5 | 2 | 0.95 | 11.9 | 81.1 |
| Comparati ve Ex. 3 | 50 | 21 | 30 | 1 | 0.75 | 10.4 | 82.6 |
| Comparati ve Ex. 4 | 60 | 18 | 0 | 4 | 0.85 | 10.9 | 82.1 |
| 1) (YID of BHET solution) * (BHET content) / 100 | | | | | | | |

As shown in Table 2, it was confirmed that the yellow factor of 10 or less had good color quality, whereas the yellow factor exceeding 10 had deteriorated color quality. Considering this together with the result of Example 1 above, it could be confirmed that physical properties of the polyester copolymer using r-BHET can be predicted by measuring the YID of the r-BHET solution.

**Claims**

1. A polyester resin obtained by copolymerizing recycled bis-2-hydroxyethyl terephthalate, a dicarboxylic acid or its derivative, and a diol containing ethylene glycol and a comonomer and having a structure in which a moiety derived from the bis-2-hydroxyethyl terephthalate, an acid moiety derived from the dicarboxylic acid or its derivative, and a diol moiety derived from the diol are repeated,
   wherein the polyester resin satisfies the following Equation 1:

[Equation 1]

$$0 < (A \times B / 100) < 10$$

in Equation 1,

A is a YID value of a 25 wt% recycled bis-2-hydroxyethyl terephthalate solution, and
B is wt% of a moiety derived from recycled bis-2-hydroxyethyl terephthalate based on a total weight of the polyester copolymer.

2. The polyester resin of Claim 1,
   wherein a solvent of the 25 wt% recycled bis-2-hydroxyethyl terephthalate solution in A is dimethylformaldehyde, ethylene glycol, water, or cyclohexanedimethanol.

3. The polyester resin of Claim 1,
   wherein A is more than 0 and less than 15.

4. The polyester resin of Claim 1,
   wherein B is 1 to 95.

5. The polyester resin of Claim 1,
   wherein the dicarboxylic acid or its derivative is terephthalic acid, isophthalic acid, 2,6-naphthalenedicarboxylic acid, diphenyl dicarboxylic acid, 4,4'-stilbenedicarboxylic acid, 2,5-furandicarboxylic acid, or 2,5-thiophenedicarboxylic acid.

6. The polyester resin of Claim 1,
   wherein the comonomer is cyclohexanedimethanol, isosorbide, or diethylene glycol.

7. The polyester resin of Claim 1,
   wherein the polyester copolymer has an intrinsic viscosity of 0.50 to 1.0 dl/g.

8. The polyester resin of Claim 1,
   wherein a value of (Hunter L value) - (Hunter b value) measured with respect to a 6 mm-thick specimen of the polyester copolymer is 83 or more.

9. A product comprising the polyester copolymer according to any one of Claims 1 to 8.

## INTERNATIONAL SEARCH REPORT

| | International application No. |
|---|---|
| | **PCT/KR2021/012486** |

**A. CLASSIFICATION OF SUBJECT MATTER**

**C08G 63/60**(2006.01)i; **C08L 67/03**(2006.01)i

According to International Patent Classification (IPC) or to both national classification and IPC

**B. FIELDS SEARCHED**

Minimum documentation searched (classification system followed by classification symbols)

C08G 63/60(2006.01); C07C 67/52(2006.01); C07C 69/82(2006.01); C08G 63/181(2006.01); C08G 63/183(2006.01); C08G 63/80(2006.01); C08G 63/86(2006.01); C08J 11/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재사용 비스-2-히드록시에틸테레프탈레이트(recycled BHET), 디카르복실산(dicarboxylic acid), 에틸렌 글리콜(ethylene glycol), 공단량체(comonomer), 디올(diol), 공중합(copolymerization), 폴리에스테르(polyester)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0061948 A (LOTTE CHEMICAL CORPORATION) 03 June 2020 (2020-06-03)<br>See abstract; claims 1, 5 and 7; paragraphs [0017], [0034], [0037], [0044], [0067]-[0069], [0091] and [0102]; manufacturing example 1; and table 2. | 1-9 |
| A | US 2004-0019234 A1 (INADA, S. et al.) 29 January 2004 (2004-01-29)<br>See paragraph [0107]; and claims 1, 16 and 35. | 1-9 |
| A | KR 10-1306581 B1 (WOONGJIN CHEMICAL CO., LTD.) 11 September 2013 (2013-09-11)<br>See claims 1 and 3; and example 1. | 1-9 |
| A | CN 111138641 A (CHINA PETROLEUM & CHEMICAL CORPORATION et al.) 12 May 2020 (2020-05-12)<br>See claims 1-10; and example 1. | 1-9 |

☑ Further documents are listed in the continuation of Box C.　☑ See patent family annex.

| | | |
|---|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **21 December 2021** | **21 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/012486**

**C.    DOCUMENTS CONSIDERED TO BE RELEVANT**

| Category* | Citation of document, with indication, where appropriate, of the relevant passages | Relevant to claim No. |
|---|---|---|
| A | CN 107459630 A (TIANJIN FANGFEI PLASTIC PRODUCTS CO., LTD.) 12 December 2017 (2017-12-12)<br>    See claim 1; and example 1. | 1-9 |

Form PCT/ISA/210 (second sheet) (July 2019)

<table>
<tr><td colspan="2" rowspan="2">INTERNATIONAL SEARCH REPORT<br>Information on patent family members</td><td colspan="2">International application No.<br><br>**PCT/KR2021/012486**</td></tr>
</table>

| Patent document cited in search report | | | Publication date (day/month/year) | Patent family member(s) | | | Publication date (day/month/year) |
|---|---|---|---|---|---|---|---|
| KR | 10-2020-0061948 | A | 03 June 2020 | None | | | |
| US | 2004-0019234 | A1 | 29 January 2004 | AT | 275538 | T | 15 September 2004 |
| | | | | AU | 1800500 | A | 05 March 2001 |
| | | | | AU | 764053 | B2 | 07 August 2003 |
| | | | | CA | 2318761 | A1 | 04 February 2001 |
| | | | | CN | 100195727 | C | 06 April 2005 |
| | | | | CN | 100320113 | A | 31 October 2001 |
| | | | | CN | 100511821 | A | 14 July 2004 |
| | | | | CN | 100511823 | A | 14 July 2004 |
| | | | | DE | 69920025 | T2 | 08 September 2005 |
| | | | | EP | 1120394 | A1 | 01 August 2001 |
| | | | | EP | 1120394 | A4 | 24 July 2002 |
| | | | | EP | 1120394 | B1 | 08 September 2004 |
| | | | | ES | 2228142 | T3 | 01 April 2005 |
| | | | | HK | 1040236 | A1 | 31 May 2002 |
| | | | | ID | 26736 | A | 08 February 2001 |
| | | | | KR | 10-0701842 | B1 | 02 April 2007 |
| | | | | KR | 10-0740059 | B1 | 16 July 2007 |
| | | | | KR | 10-0740060 | B1 | 16 July 2007 |
| | | | | KR | 10-2001-0086254 | A | 10 September 2001 |
| | | | | KR | 10-2006-0107858 | A | 16 October 2006 |
| | | | | KR | 10-2006-0107859 | A | 16 October 2006 |
| | | | | TW | 506968 | B | 21 October 2002 |
| | | | | US | 6630601 | B1 | 07 October 2003 |
| | | | | US | 7193104 | B2 | 20 March 2007 |
| | | | | WO | 01-10812 | A1 | 15 February 2001 |
| | | | | WO | 01-10812 | A9 | 26 April 2001 |
| KR | 10-1306581 | B1 | 11 September 2013 | KR | 10-2012-0133037 | A | 10 December 2012 |
| CN | 111138641 | A | 12 May 2020 | None | | | |
| CN | 107459630 | A | 12 December 2017 | None | | | |

Form PCT/ISA/210 (patent family annex) (July 2019)